# EUROPEAN PATENT APPLICATION

(11) **EP 3 756 449 A1**
(43) Date of publication of application: **30.12.2020**
(21) Application number: 20190942.1
(22) Date of filing: 22.01.2016
(51) Int. Cl.: A01G 3/04

(54) **POWER TOOL FOR CUTTING OR TRIMMING**

(62) Document number(s) of the earlier application(s) in accordance with Art. 76 EPC: 16885703.5 / 3 405 020
(71) Applicant: Techtronic Outdoor Products Technology Limited, Hamilton HM12 (BM)
(72) Inventor: DONG, Li Teng, Dongguan City Guangdong 523960 (CN); HUO, Tian, Dongguan City Guangdong 523960 (CN); NESOM, Jeff, Dongguan City Guangdong 523960 (CN)
(74) Representative: Grünecker Patent- und Rechtsanwälte PartG mbB

(57) **Abstract**

A power tool for cutting or trimming comprising: a handle rotatably connected to a main body, and a locking mechanism arranged to selectively restrict a rotational movement of the handle with respect to the main body and/or the power tool from being activated in response to an actuation of an actuator, wherein the locking mechanism comprises a handle rotation lock arranged to move between a locking position and an unlocking position, wherein the handle rotation lock is provided on the handle at a position adjacent to a connection between a connection portion of the handle and the main body, and wherein the rotational movement of the handle is restricted when the handle rotation lock is positioned at the locking position. According to the invention, the locking mechanism further comprises a blocking means, which is located in a part of the handle adjacent to the main body and which has a protrusion extending therefrom, wherein the blocking means is constructed such, when the actuator is depressed, a part of the actuator engages with the blocking means, so that the protrusion is shifted downwards to block the handle rotation lock from being moved to the unlocking position, such, when the actuator is released, the protrusion no longer blocks the handle rotation lock, so that the handle rotation lock is now free to be moved to the unlocking position, and such, when the handle rotation lock is moved in the unlocking position, the movement of the actuator is restricted by the engagement of the blocking means therewith, so that the actuator is restricted from actuating the power tool.

## Description

### TECHNICAL FIELD

The present invention relates generally to a power tool for cutting or trimming, and enhancement therefor. More particularly but not exclusively it relates to a trimmer, and several mechanisms to improve the performance of the trimmer and address shortcomings concern anti-vibration, occupational safety health, noise reduction and heat exhaustion.

A power tool is commonly used in daily life. Power tools with electric motors or combustion engines are employed in many fields of use. For example, power tools may be configured to power various accessory tools and attachments, such as cutting blades, sanding discs, grinding tools, trimming tools etc. for performing a variety of tasks such as drilling, screwing, percussion drilling, sawing, cutting, grinding , polishing or trimming etc.

Although there are varieties of power tools available in the market, these power tools have several shortcomings. Ergonomics, occupational safety and health, life-cycle and the internal overheating of the electric motors or combustion engines are some of the problems experienced by power tools. In turn, one or more of these shortcomings may affect the operator of the power tool to not perform their routines efficiently.

### SUMMARY OF THE INVENTION

In accordance with a first aspect of the present invention, there is provided a power tool for cutting or trimming comprising: a main body having at least one handle arranged to be grasp by a user during the operation of the power tool, wherein the main body includes an anti-vibration mechanism arranged to reduce the transmission of any vibration forces generated by the main body to the at least one handle during the operation of the power tool.

In one embodiment of the first aspect, the anti-vibration mechanism is arranged to absorb at least a portion of the vibration generated by the main body.

In one embodiment of the first aspect, the anti-vibration mechanism comprises an intermediate mounting structure having a resilient member.

In one embodiment of the first aspect, the resilient member includes rubber.

In one embodiment of the first aspect, the resilient member is arranged to connect with a mounting structure in connection with the main body.

In one embodiment of the first aspect, the intermediate mounting structure is arranged to connect the at least one handle to the main body.

In one embodiment of the first aspect, the resilient member is provided at a position where the at least one handle connects to the main body.

In one embodiment of the first aspect, the intermediate mounting structure is arranged to connect at least two portions of each of the at least one handle.

In one embodiment of the first aspect, the intermediate mounting structure further comprises a strengthening structure arranged to enhance the connection between the at least two portions.

In one embodiment of the first aspect, the strengthening structure is at least partially combined with the resilient member.

In accordance with a second aspect of the present invention, there is provided a power tool for cutting or trimming comprising: a handle rotatably connected to a main body, and a locking mechanism arranged to selectively restrict a rotational movement of the handle with respect to the main body and/or the power tool from being activated in response to an actuation of the actuator.

In one embodiment of the second aspect, the locking mechanism comprises a handle rotation lock arranged to move between a locking position and an unlocking position, and wherein the rotational movement of the handle is restricted when the handle rotation lock is positioned at the locking position.

In one embodiment of the second aspect, the locking mechanism is arranged to restrict the rotational movement of the handle when the power tool is activated.

In one embodiment of the second aspect, the handle rotation lock is locked in the locking position when the power tool is activated in response to an actuation of the actuator provided on the handle.

In one embodiment of the second aspect, the locking mechanism is arranged to restrict the activation of the power tool when the handle rotation lock moves to the unlocking position.

In one embodiment of the second aspect, the actuator is locked in a position such that the power tool remains deactivated when the handle rotation lock moves to the unlocking position.

In one embodiment of the second aspect, the locking mechanism further comprises an interlock structure arrange to cooperate with the handle rotation lock and the actuator so as to selectively restrict the rotational movement of the handle with respect to the main body and/or the actuation of the actuator.

In accordance with a third aspect of the present invention, there is provided a power tool for cutting or trimming comprising: a main body having a combustion engine and an air intake mechanism provided on the main body and arranged to facilitate an intake of air required by the combustion engine, wherein the air intake mechanism is further arranged to reduce a noise generated by the intake of air during an operation of the combustion engine.

In one embodiment of the third aspect, the air intake mechanism comprises an inlet and an outlet in fluid communication with the inlet through an air intake passage, and wherein the outlet is arranged to fluidly communicate with a carburetor hole of the combustion engine.

In one embodiment of the third aspect, the air intake mechanism is arranged to reduce the noise generated by the intake of air by extending a travelling path of the air between the inlet of the air intake mechanism and the carburetor hole of the combustion engine.

In one embodiment of the third aspect, the air intake mechanism further comprises at least one air diverting structure arrange to extend the air intake passage between the inlet and the outlet.

In one embodiment of the third aspect, the air intake mechanism further comprises a filter within the air intake passage arranged to filter the intake air and/or reduce the noise generated by the intake of air.

In one embodiment of the third aspect, the air intake mechanism further comprises a choke actuator arranged to actuate a choke plate of provided in the air intake mechanism so as to control an amount of the intake of air.

In one embodiment of the third aspect, the choke actuator is a slider.

In accordance with a fourth aspect of the present invention, there is provided a power tool for cutting or trimming comprising: a main body having a combustion engine and an exhaust outlet arranged to discharge exhaust generated by the combustion engine towards a position substantially away from an object being cut or trimmed by the power tool.

In one embodiment of the fourth aspect, the exhaust is discharged towards a position adjacent to where an elongated blade connects to the main body.

In one embodiment of the fourth aspect, the exhaust is discharged towards a direction substantially parallel to a main axis of the elongated blade.

In one embodiment of the fourth aspect, the power tool further comprises an exhaust tube arranged to deliver the exhaust generated by the combustion engine to the exhaust outlet.

Certain embodiments of the present invention may be advantageous by minimizing at least some of these issues listed above with reference to the use of a power tool. The inclusion of an anti-vibration handle structure, a handle rotation lock and trigger lock mechanism, a noise reduction engine air-intake box, and a forward pointing exhaust outlet may improve a power tool and enhance an operator's experience with using it.

Embodiments of the present invention will now be described, by way of example, with reference to the accompanying drawings in which:
Figure 1 shows a perspective view of a power tool implemented with at least one of the features in accordance with the four embodiments of the present invention ;
Figure 2 shows a cross section view of the front handle of a power tool illustrating the anti-vibration handle structure in accordance with the first embodiment of the present invention ;
Figure 3 shows an enlarged view of the anti-vibration handle structure of Figure 2 illustrating the engagement between the handle and the main body ;
Figure 4A shows a cross section view of the rear handle of a power tool illustrating yet another anti-vibration handle structure in accordance with the first embodiment of the present invention ;
Figure 4B shows a cross section view of the rear handle of a power tool illustrating yet another anti-vibration handle structure in accordance with the first embodiment of the present invention ;
Figure 5 shows a schematic diagram of the handle rotation lock and trigger lock mechanism in accordance with the second embodiment of the present invention ;
Figure 6 shows a schematic diagram of the rear handle with the rotation unlocked and the trigger locked ;
Figure 7 shows a schematic diagram of the rear handle with the rotation lock being locked by the trigger;
Figure 8 shows a cross section view of the noise reduction engine air-intake box of a power tool in accordance with the third embodiment of the present invention ;
Figure 9 shows a schematic diagram of the noise reduction engine air-intake box of Figure 8 illustrating the air travelling path ;
Figure 10A shows a perspective view of the air-intake box and a slider for actuating the choke plate of the air-intake box in accordance with the third embodiment of the present invention ;
Figure 10B shows a perspective view in another angle of the air intake box of Figure 10A ;
Figure 11 shows a side view of the power tool illustrating the hot exhaust air pipe in accordance with the fourth embodiment of the present invention ;
Figure 12 shows an enlarged cross section view of the engine of the power tool illustrating one end of the hot exhaust air pipe of Figure 10 ; and
Figure 13 shows a schematic diagram of the front view of the power tool illustrating the other end of the hot exhaust air pipe of Figure 10.

### DETAILED DESCRIPTION OF THE PREFERRED EMBODIMENT

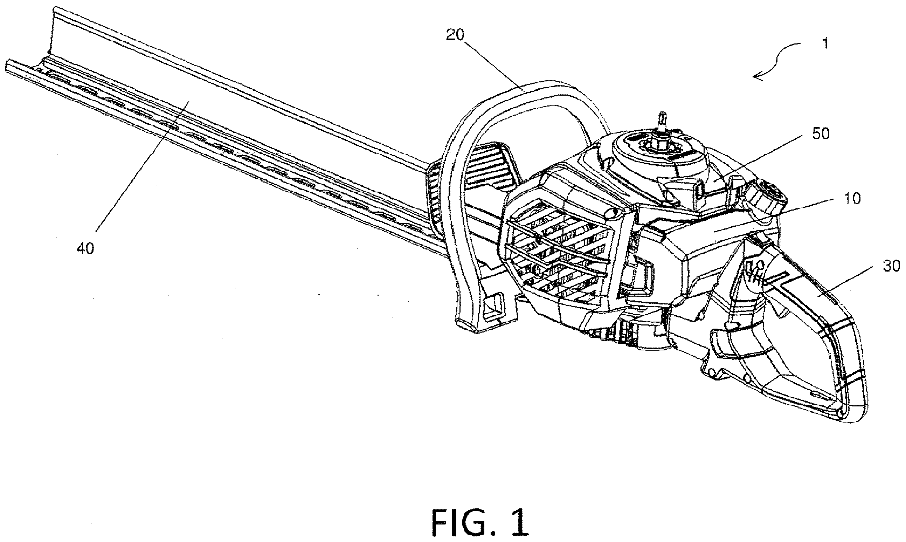

With reference to Figure 1, there is shown an embodiment of a power tool 1 for cutting and trimming. In this example, the power tool comprises: a main body 10, a front handle 20, a rear handle 30, and an operating member 40 such as blades. The main body 10 may further comprises a combustion engine 50 and/or a motor arranged to drive the operating member 40, such that the power tool 1 may be used for cutting or trimming operations.

Power tool 1 may be implemented as a hedge trimmer for trimming hedges or other gardening operations. Preferably, the power tool 1 may be provided with at least one of the following mechanisms/structures such as an anti-vibration mechanism 100/150, a handle rotation lock and trigger lock mechanism 200, a noise reduction engine air-intake box 300, and a forward pointing exhaust outlet 400 in accordance with the embodiments of the present invention.

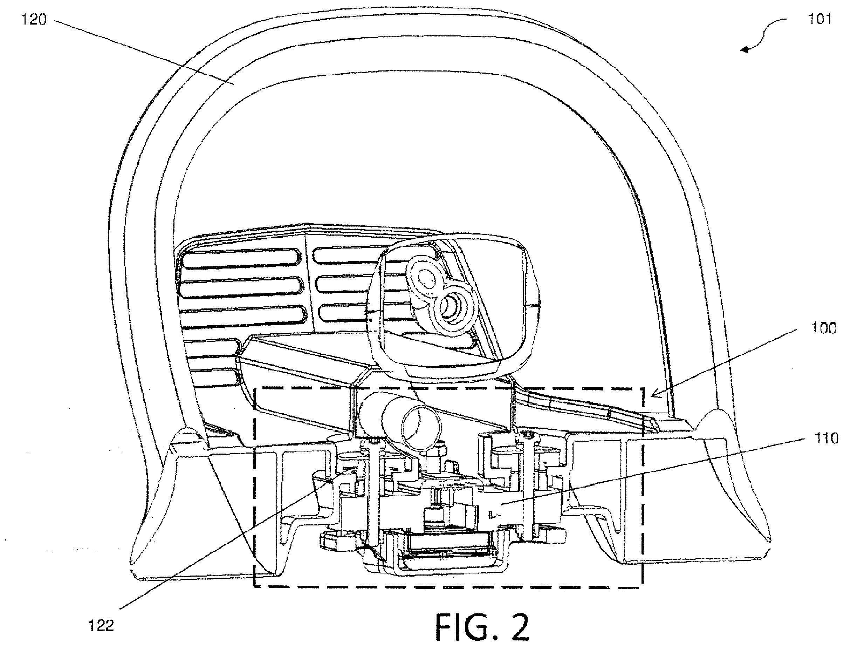

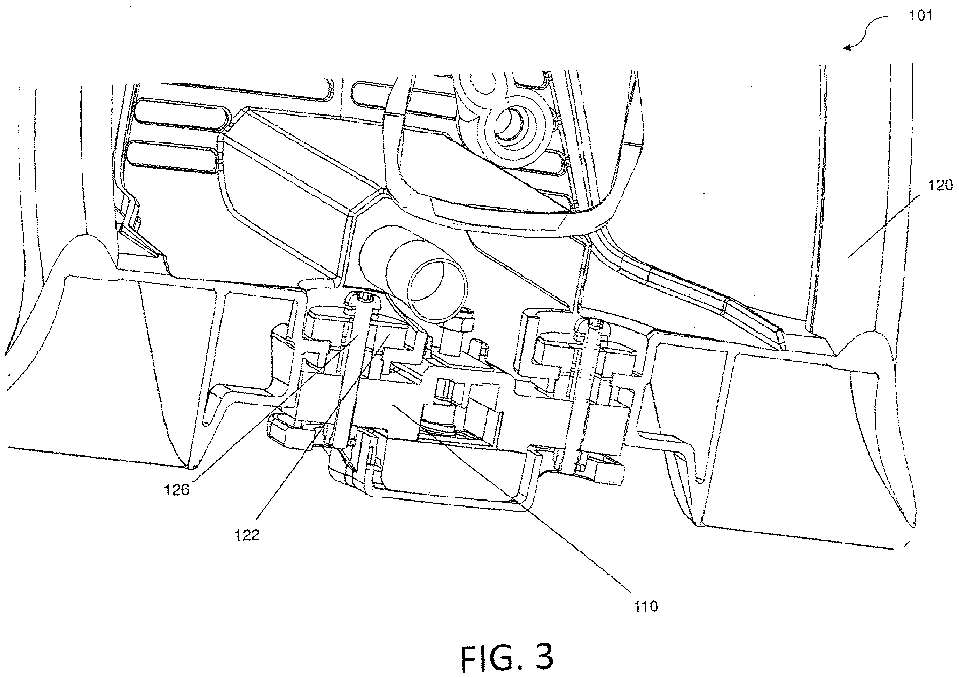

With reference to Figures 2 to 3, there is shown an embodiment of a power tool 101 for cutting or trimming comprising: a main body 110 having at least one handle 120/130 arranged to be grasp by a user during the operation of the power tool 101, wherein the main body 110 includes an anti-vibration mechanism 100 arranged to reduce the transmission of any vibration forces generated by the main body 110 to the at least one handle during the operation of the power tool 101.

In this embodiment, the power tool 101 is provided with a main body 110, a front handle 120 and a rear handle 130. The handles are fixedly mounted to the main body 110 and the front handle 120 and/or the rear handle 130 may be grasped by a user. During the operation of the power tool 101, vibration is generated in the main body 110 due to the movements of interior parts in the main body of the power tool 101. In addition, vibrations generated by the operating members (such as the blades) may be transmitted back to the main body 110. These vibrations are particularly severe after extended usage of the power tool 101, and undesirably such vibration may be further transferred to the handle 120/130 and results in a further vibration with amplified magnitude.

Preferably, the power tool 110 includes an anti-vibration mechanism 100 arranged to reduce the transmission of any vibration forces generated by the main body 110 to the front handle 120 and/or the rear handle 130 during the operation of the power tool 101. With reference to Figure 2, the handle 120 is not connected directly to the main body 110 but is engaged to a pair of intermediate mounting structure having a resilient member, where each of the intermediate mounting structures are arranged to connect at the two ends of the front handle 120. Exemplarily, the intermediate mounting structure may be rubber pieces 122 and these rubber pieces 122 are mounted to the main body 110 (such as the housing of the main body) of the power tool 101, such that the anti-vibration mechanism 100 may terminate the transmission of generated vibration or absorb at least a portion of the vibration generated by the main body 110.

Referring to Figures 2-3, the rubber pieces 122 are disposed at the positions where the front handle 120 is connected to the main body 110. At least a portion of the front handle 120 is fastened to the main body 110 by fastening means 126 (e.g. screws, bolts, mounting pin, etc.), and the rubber pieces 122 are fixed between the front handle 120 and the main body 110.

In this example embodiment, when the power tool 110 is actuated, the main body 110 is under severe vibration and the rubber pieces 122 may absorb a significant portion of vibration and therefore terminate the transmission of vibration to the front handle 120.

Alternatively, the rubber pieces 122 may be substituted by any other resilient members such as elastomers, cork, dense foam or laminate materials,

Optionally, one or more additional mounting structures, such as metal connector or any other non-metal mounting structure made of plastic or composites, may be provided on the main body 110 of the power tool 101. The front handle 120 may be fastened to the mounting structure on the main body 110 by the fastening means 126. The rubber piece 122 may be mounted to at least a portion of the mounting structure such that the rubber pieces 122 are fixed between the front handle 120 and the mounting structure. For Example, the mounting structure may be provided as a leaf spring connected with the main body 110. When the power tool 110 is actuated, the mounting structure together with the rubber pieces 122 may further enhance the vibration absorption and the vibration transmission termination performance of the anti-vibration mechanism 100.

Alternatively, the combination of the mounting structure and the rubber pieces 122 may also be substituted by a single rubber connector.

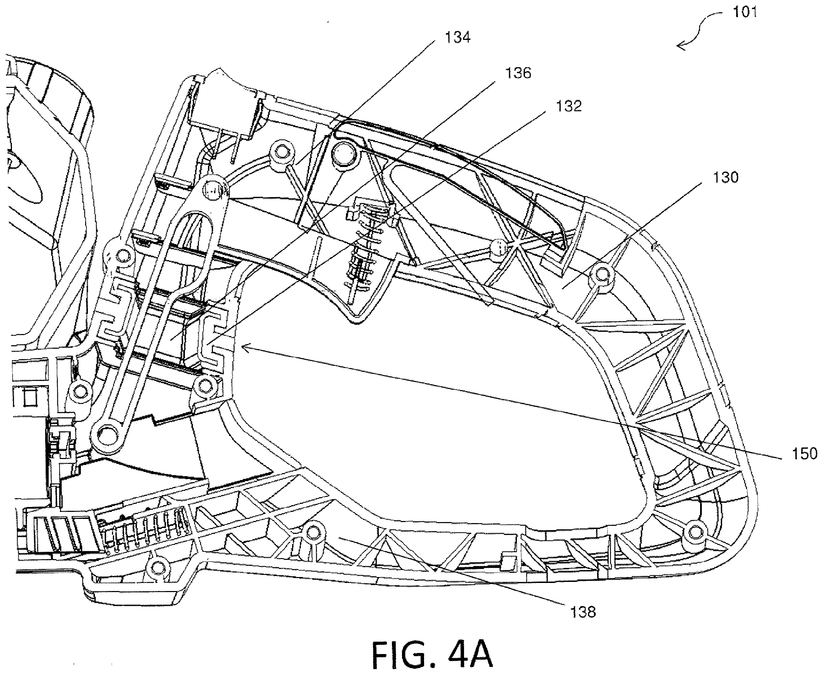

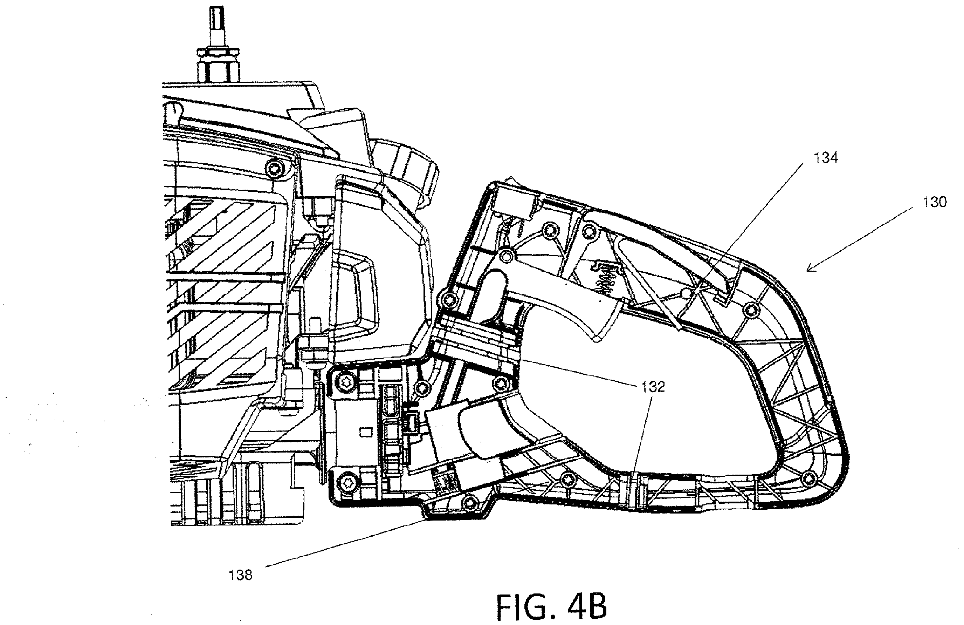

With reference to Figure 4A, there is shown an alternative example embodiment of an anti-vibration mechanism 150. Similarly, the rear handle 130 in Figure 4 also comprises a rubber connecter 132 arranged to reduce the transmission of any vibration forces generated by the main body 110 to the at least one handle during the operation of the power tool 101.

In this embodiment, the rubber connector 132 is disposed between the grip portion 134 and the connecting portion 138 of the rear handle 130. During the operation of the power tool 101, the main body 110 is under severe vibration and these vibrations may be further transmitted to the connecting portion 138 of the rear handle 130. The rubber connector 132 may effectively provide a vibration dampening effect so as to dampen the vibration to the rear handle 130, such that the grip portion 134 is isolated from the vibration at the connecting portion 138.

Optionally, a strengthening structure, such as a metal connector 136, may be provided within the rubber connecter 132. The strengthening structure may prevent the disengagement between the rear handle 130 and the rubber connecter 132 in order to enhance the connection therebetween. In addition, one or more additional rubber connector may be provided between different portions of the rear handle 132 so as to enhance the desired anti-vibration effect.

Similarly, the rubber connecter 132 may be substituted by any other resilient members such as elastomers, cork, dense foam or laminate materials, and the metal connector 136 may be substituted by any other strengthening structure such as plastic or composites. Alternatively, the metal connector 136 may be combined with the rubber connecter 132 to form a single piece of connector. For example, the strengthening structure may be partially or entirely encapsulated by the resilient member.

With reference to Figure 4B, there is shown another alternative example embodiment of an anti-vibration mechanism 150. In this example, the rear handle 130 is provided with two rubber connecters 132 arranged to reduce the transmission of any vibration forces generated by the main body 110 to the grip portion 134 via the connecting portion 138 of the rear handle 130. As appreciated by a skilled person, more or fewer rubber connectors 132 may be included in a handle to facilitate the anti-vibration feature of the power tool.

Optionally, the front handle 120 as shown in Figures 2-3 may also comprises a pair of rubber connecters 132 so as to enhance the vibrating reduction effect of the front handle 120.

Advantageously, the main body 110 of the power tool 101 subjects to vigorous vibration during cutting and trimming operations while such vibrations are especially severe at the connection between the main body 110 and its handles 120/130 attached thereto. Such undesirable vibrations are damped by the anti-vibration mechanism 100, i.e. absorbed by the rubber pieces 122 or the rubber connector 132, and thus are not transmitted to the front handle 120 or the rear handle 130. Therefore, the user who holds the handles 120/130 during cutting or trimming operation may enjoy better user experience and unlikely to suffer from muscle fatigue.

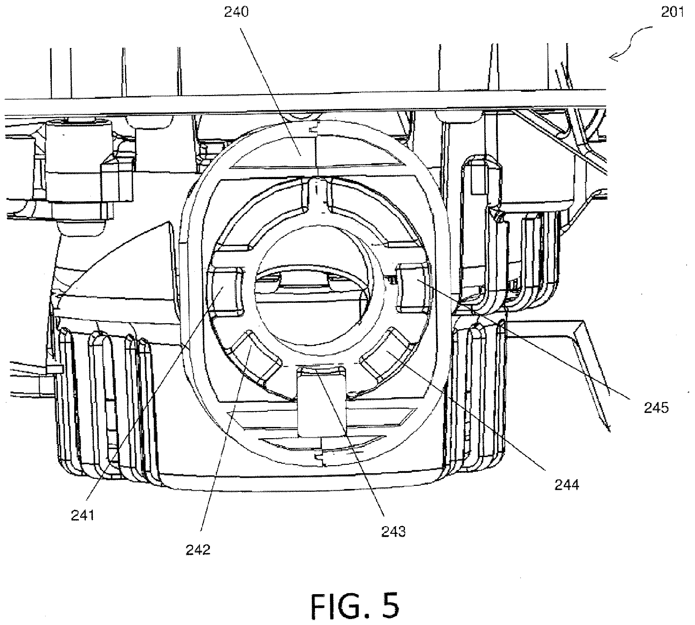

With reference to Figures 5-7, there is shown an embodiment of a power tool 201 for cutting or trimming comprising: a handle 230 rotatably connected to a main body 210, and a locking mechanism 200 arranged to selectively restrict a rotational movement of the handle 230 with respect to the main body 210 and/or the power tool 201 from being activated in response to an actuation of the actuator.

In this embodiment, the power tool 201 comprises a rear handle 230 arranged to rotate along a rotational axis with respect to the main body. The rotational axis is substantially parallel to the main axis of the operating member (such as the blades) . The rear handle 230 may be fixed in a plurality of angles relative to the main body such that it may facilitate trimming or cutting operations in different angles performed by a user and may reduce accident and/or fatigue to the user due to improper postures.

Preferably, the power tool 201 may further comprise a locking mechanism 200 arranged to lock the handle 230 at the plurality of angles relative to the main body. The locking mechanism may comprise a handle rotation lock movable between a locking position and an unlocking position. The user may selectively lock and unlock the rotation of the rear handle 230 by moving the handle rotation lock between the locking position and the unlocking position so as to obtain a user's preferred grasp for using the power tool 201.

Referring to Figures 5-7, the handle rotation lock may comprise a rotation lock puller 234 and a handle angle adjuster 240. The rotation lock puller 234 is provided on the rear handle 230 at a position substantially adjacent to the connection between the connection portion of the handle 230 and the main body 210, and is movable between a locking position and an unlocking position by the user. The rotation lock puller 234 is arranged to cooperate with the handle angle adjuster 240 provided on the main body 210. The handle angle adjuster 240 comprises a plurality of fix pockets 241, 242, 243, 244, 245. A wedge 238 disposed at the tip of the rotation lock puller 234 is arranged to selectively engage with one of these pockets 241-245, such that the rear handle 230 can be fixed at a numbers of predefined angles with respect to the main body 210.

When the rotation lock puller 234 is positioned at the locking position, the wedge 238 engages with one of the pockets 241-245 of the handle angle adjuster 240, such that the rotational movement of the rear handle 230 is restricted. When the rotation lock puller 234 is positioned at the unlocking position, the wedge 234 disengages with the pockets and the rear handle 230 may rotate with respective to the main body freely or within a certain limit.

An actuator, such as a throttle trigger 232, is provided on the handle 230 and is arranged to control the power supply to the power tool by release and depress thereof. Preferably, a throttle cable (not shown) connecting the throttle trigger 232 and the main body may also be included.

Preferably, the locking mechanism may further comprise an interlock structure arranged to cooperate with the handle rotation lock and the actuator. For example, a blocking means 236 may be disposed between the throttle trigger 232 and the rotation lock puller 234, such that the blocking means 236 may cooperate with the throttle trigger 232 and the rotation lock puller 234. Such interlock structure may selectively restrict the rotational movement of the handle 230 with respect to the main body 210 and/or the actuation of the throttle trigger 232 when the rotation lock puller 234 and the trigger 232 are in different positions.

In one example operation, when the throttle trigger 232 is depressed, part of the throttle trigger 232 engages with the blocking means 236, such that the protrusion 237 of the blocking means 236 extended therefrom is shifted downwards to block the rotation lock puller 234 from being pulled to the unlocking position. On the other hand, when the throttle trigger 232 is released, the protrusion 237 no longer blocks the rotation lock puller 234. The rotation lock puller 234 is now free to be pulled to the unlocking position. This may ensure that the rotational movement of the handle 230 is restricted when the power tool 201 is activated.

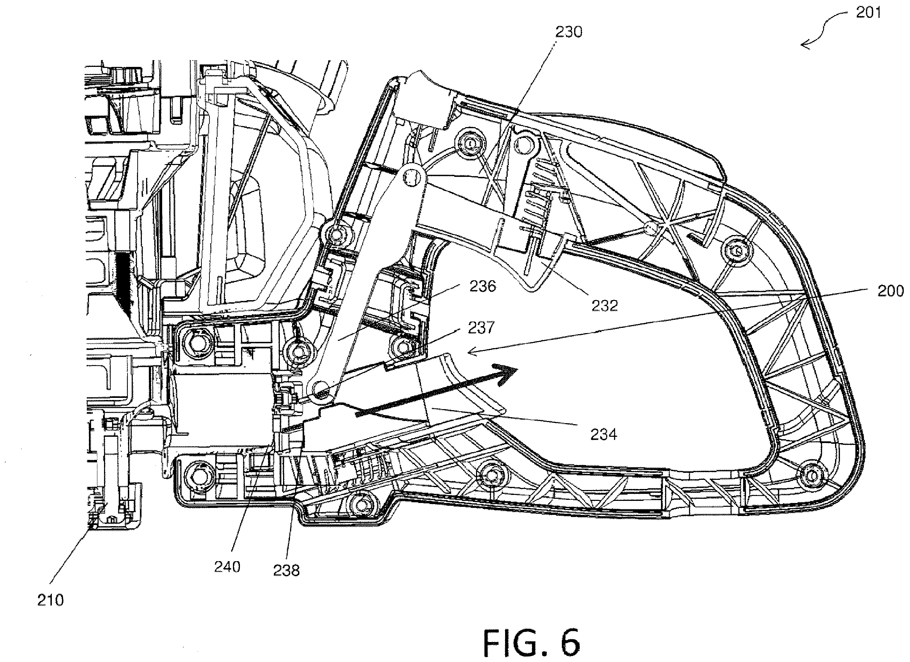

Referring to Figure 6, when the rotation lock puller 234 is pulled out by a user in the direction away from the main body 210 towards the unlocking position, the rear handle 230 is free to rotate clockwise or anticlockwise with respect to the main body 210. At the same time, the movement of the throttle trigger 232 is restricted by the engagement of the blocking means 236 therewith, such that the throttle trigger 232 is restricted from actuating the power tool via the throttle cable. As such, the trigger 232 is locked in a position such that the power tool remains deactivated when the handle rotation lock moves to the unlocking position. This ensures the power tool 201 remain deactivated when the rear handle 230 is in a rotatable state.

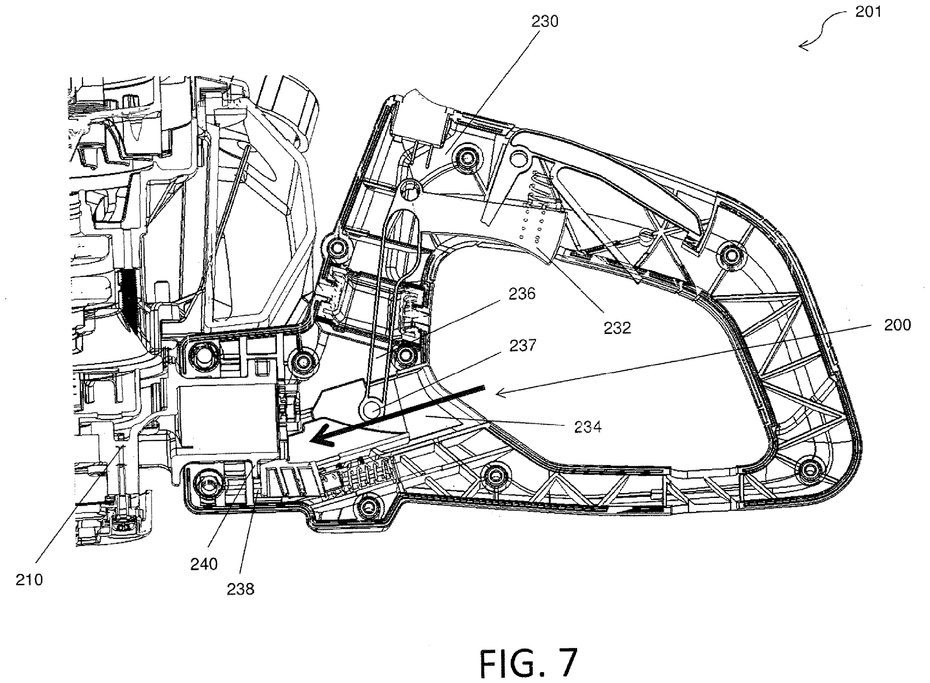

Now referring to Figure 7, when the rear handle 230 is locked at one of the available orientations by pushing the rotation lock puller 234 towards the main body 210 to reach the locking position, the throttle trigger 232 is no longer restricted by the engagement of the blocking means 236 and thus allowing the throttle trigger 232 to be pressed by a user to actuate the power tool via the throttle cable.

Optionally, it should be understood that the same or a similar handle rotation lock and trigger lock mechanism 200 may be used for facilitating rotational movements of other handles, such as the front handle 220.

Advantageously, the handle rotation lock and trigger lock mechanism 200 ensures that the power tool 201 may only operate when the handle 220/230 is properly locked, thus it provides rotatable handles for ergonomic consideration while user safety is ensured by such safety mechanism, limiting the interlock between rotation of the handle 220/230 and the actuation of the power tool 201. In fact, adjusting the orientation of the handles 220/230 while the power tool 201 is actuated is highly hazardous and undesirable in light of occupational safety health. As such, this mechanism 200 allows the freedom to handles 220/230 orientation without trading off the safety of the user throughout the operation.

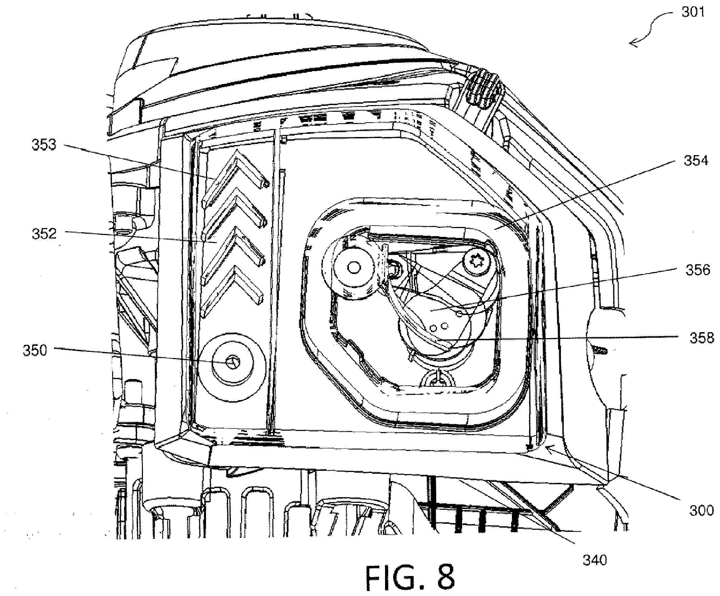

With reference to Figures 8-9, there is shown an embodiment of a power tool 301 for cutting or trimming comprising: a main body 310 having a combustion engine 340 and an air intake mechanism 300 provided on the main body 310 and arranged to facilitate an intake of air required by the combustion engine 340, wherein the air intake mechanism 300 is further arranged to reduce a noise generated by the intake of air during an operation of the combustion engine 340.

In this embodiment, the combustion engine 340 is housed within the main body 310. During the operation of the power tool 301, the combustion engine 340 consumes a considerable volume of air to complete the required combustion reaction of the fuel. As the supplied air enters the combustion engine 340 through the carburetor hole 358, a high level of noise varying from an intense hiss at small throttle openings to a roar at full throttle is generated by the intake air.

Preferably, an air intake mechanism is provided for facilitating the intake of air. With reference to Figure 8, the air intake mechanism 300 is provided with an inlet 350 and an outlet, the outlet is in fluid communication with the inlet through an air intake passage 352. In addition, the outlet is further arranged to fluidly communicate with carburetor hole 358 of the combustion engine 340 such that the combustion engine 340 may be supplied with air through the air intake mechanism.

The air intake mechanism 300 may have a substantially enclosed box structure with a specific configuration arranged to facilitate an intake of air required by the combustion engine 340. The air intake mechanism 300 comprises an intake hole 350 and an outlet hole connected to the carburetor hole 358 of the combustion engine housed within the main body. One or more air diverting structures 353 arranged to extend the travelling path of the air between the intake hole 350 of the air intake mechanism 300 and the carburetor hole 358 connected to the combustion engine 340. With the air diverting structures 353, the air intake passage 352 may be defined as a labyrinth which may extend/prolong the travel duration of the intake air before the air may reach the combustion engine 340, so as to reduce the noise generated.

The filter foam 354 provided within the air intake passage and disposed about the carburettor intake hole 358 to filter the intake air and further reduce the noise generated by the intake of air before reaching the carburettor intake hole 358. Additionally, a choke plate 356 is provided to selectively cover the carburettor intake hole 358 so as to control the intake volume of the treated air passing through therein.

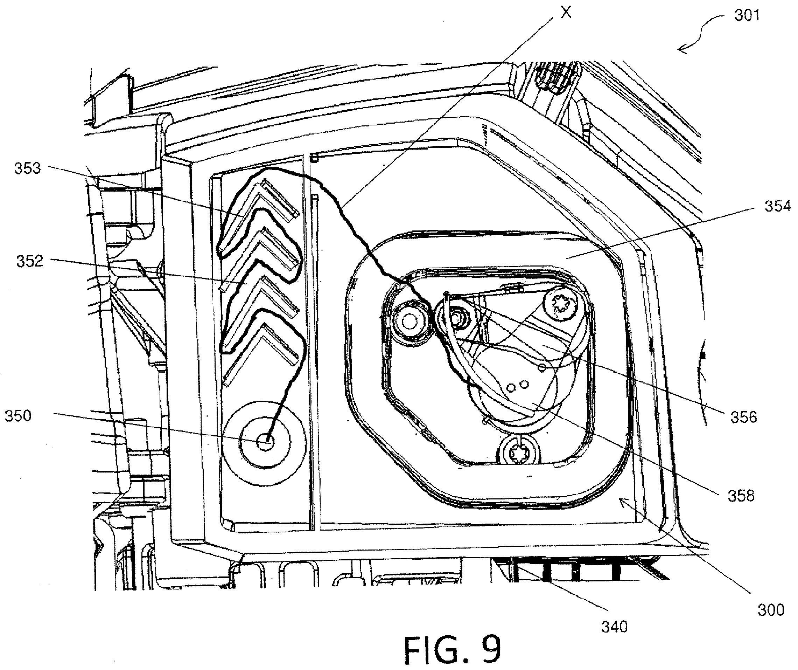

As shown in Figure 9, the intake air is introduced from the intake hole 350 and guided by the plurality of air diverting structures 353 to travel through the labyrinth 352. Subsequently the intake air enters the carburetor hole 358 through the filter foam 354 and the choke plate 356. An exemplified air flow within the air intake mechanism 300 is shown in the Path X in Figure 9 for better understanding of the noise reduction process.

As such, the intake air travels a longer passage before reaching the carburettor hole 358 comparing to any conventional air boxes without any air diverting structure. Any possible noises generated by the intake air introduced into the carburettor intake hole 358 are significantly reduced upon leaving the air travelling path within the air intake mechanism 300.

Alternatively, the air intake system may comprise other means for extending the travelling path of the air such as pipes, tubes, channels, manifold etc, while the foam air filter 306 may be substituted by any other filter means such as screens, mess etc. to achieve the same filtering effect.

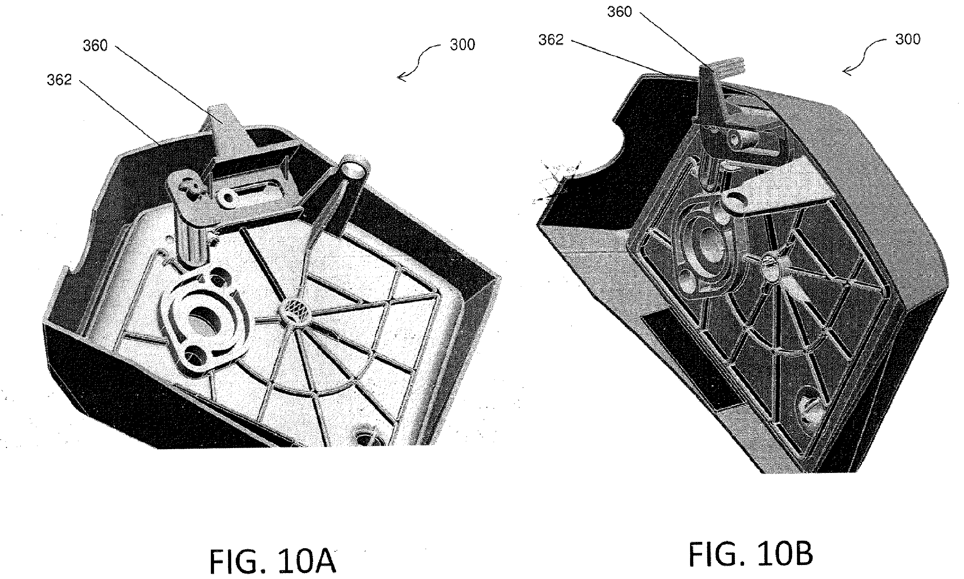

With reference to Figures 10A and 10B, the air intake mechanism 300 may be further provided with a choke actuator 360 for the control of the amount of the intake of air. For example, the choke actuator 360 may be implemented as a slider that may further actuate the choke plate 356 so as to control the opening of the carburetor hole 358. Preferably, the slider 360 moves in a translational direction substantially along an edge 362 of the substantially enclosed box structure and the choke plate 356 is then actuated/rotated by the slider in response to the sliding movement of the slider 360. This structure may be advantageous in that the slider is closely arranged near an edge of the air box such that the choke actuator for actuating the choke plate may be less likely to be unintentionally moved/actuated by the user (such as an arm or clothes of the user) . In addition, such structure is more compact when compared to structures with conventional choke plate with pivoting choke lever which protruding outwardly from the air box with a substantial length.

Advantageously, the power tool 301 operator or any person adjacent to the power tool 301 operator is well protected and are no longer suffer from high level of noise generated by engine and exposed to the risk of nose-induced hearing loss or occupational deafness.

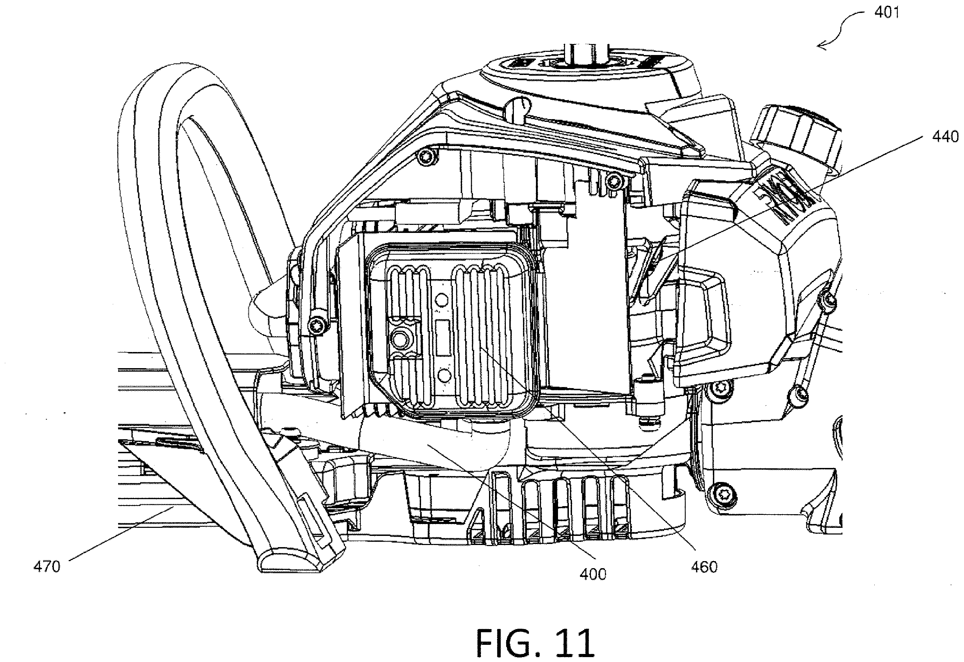

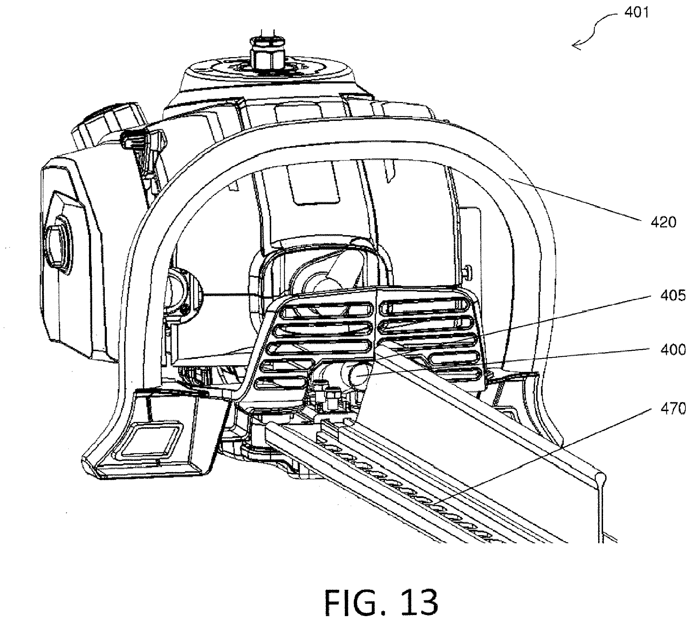

With reference to Figures 11-13, there is shown an embodiment of a power tool for cutting or trimming comprising: a main body 410 having a combustion engine 440 and an exhaust outlet 400 arranged to discharge exhaust generated by the combustion engine 440 towards a position substantially away from an object being cut or trimmed by the power tool.

In this embodiment, the power tool 401 comprises an elongated blade 470 for use to cut or trim an object such as a hedge. The elongated blade 470 is provided in a substantially front position of the main body 410 such that objects in front of the main body 410 is cut or trimmed by the elongated blade 470 during cutting or trimming operation.

An exhaust outlet 400 is provided and is arranged to discharge the exhaust generated in the main body by the combustion engine upon a completion of the combustion reaction. The exhaust may include hot gases which may burn any object in contact with the exhaust. Hence it is preferable that the exhaust outlet is provided at a position such that the generated exhaust is discharged away from the object or hedge being cut.

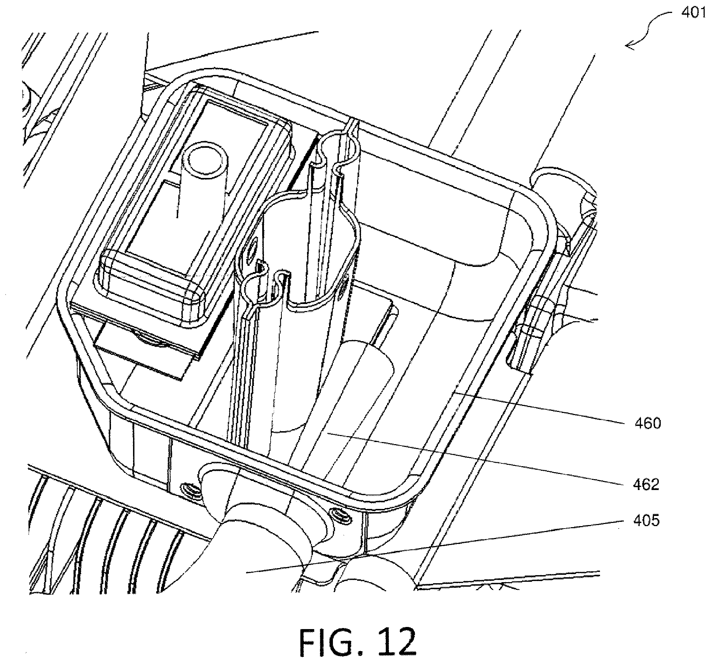

With reference to Figure 12, the exhaust outlet 400 may be positioned adjacent to where the elongated blade 470 connects to the main body 410. Preferably, the exhaust is discharged towards a direction substantially parallel to a main axis of the elongated blade 470. An exhaust tube 405 may be included to deliver the exhaust generated from the combustion engine to the exhaust outlet 400 (the opening of the exhaust tube) during operation. Also with reference to Figure 12, the exhaust tube 405 may be deposited underneath and about the main body 410, where the exhaust outlet 400 of the exhaust tube 405 reaches the spacing underneath of the front handle 420, such that the exhaust is discharged and redirected towards a position adjacent to where the elongated hedge blade 470 connects to the main body 410.

Optionally, a muffler 460 with a tube 462 is disposed between the fluid communication of the combustion engine 440 and the exhaust tube 405 to reduce the noise of the hot exhaust gas.

As such, the hot exhaust gas are withdrawn from the combustion engine 440 through the exhaust tube 405 and discharged from the outlet 400 which is remote from the high working temperature combustion engine 440 during the operation. This may prevent the heat energy from remaining in the combustion engine 440 to avoid melting down any components of the power tool 401 during operation, or igniting the cutting hedges which may cause fire hazard. The life cycle of the power tool and the components thereof is prolonged by the forward point exhaust outlet arrangement. In addition, the hot exhaust gas is discharged substantially away from the operator of the power tool.

It will be appreciated by persons skilled in the art that although the embodiments comprising the four features including an anti-vibration mechanism 100/110, a handle rotation lock and trigger lock mechanism 200, a noise reduction engine air-intake box 300, and a forward pointing exhaust outlet 400 are related to the power tool or the trimmer, these embodiments may be applied in any other power tools such as chain saw, circular saw, grass cutter, lawn mower, gardening tools, electronic device or household appliances with minor modification and without departing from the concept of the present invention.

It will be appreciated by persons skilled in the art that numerous variations and/or modifications may be made to the invention as shown in the specific embodiments without departing from the spirit or scope of the invention as broadly described. The present embodiments are, therefore, to be considered in all respects as illustrative and not restrictive.

Any reference to prior art contained herein is not to be taken as an admission that the information is common general knowledge, unless otherwise indicated.

### List of preferred embodiments

1. A power tool for cutting or trimming comprising: A main body having at least one handle arranged to be grasp by a user during the operation of the power tool, wherein the main body includes an anti-vibration mechanism arranged to reduce the transmission of any vibration forces generated by the main body to the at least one handle during the operation of the power tool.
2. A power tool for cutting or trimming in accordance with embodiment 1, wherein the anti-vibration mechanism is arranged to absorb at least a portion of the vibration generated by the main body.
3. A power tool for cutting or trimming in accordance with embodiment 2, wherein the anti-vibration mechanism comprises an intermediate mounting structure having a resilient member.
4. A power tool for cutting or trimming in accordance with embodiment 3, wherein the resilient member includes rubber.
5. A power tool for cutting or trimming in accordance with embodiment 3, wherein the resilient member is arranged to connect with a mounting structure in connection with the main body.
6. A power tool for cutting or trimming in accordance with embodiment 5, wherein the intermediate mounting structure is arranged to connect the at least one handle to the main body.
7. A power tool for cutting or trimming in accordance with embodiment 6, wherein the resilient member is provided at a position where the at least one handle connects to the main body.
8. A power tool for cutting or trimming in accordance with embodiment 3, wherein the intermediate mounting structure is arranged to connect at least two portions of each of the at least one handle.
9. A power tool for cutting or trimming in accordance with embodiment 8, wherein the intermediate mounting structure further comprises a strengthening structure arranged to enhance the connection between the at least two portions.
10. A power tool for cutting or trimming in accordance with embodiment 9, wherein the strengthening structure is at least partially combined with the resilient member.
11. A power tool for cutting or trimming comprising: a handle rotatably connected to a main body, and a locking mechanism arranged to selectively restrict a rotational movement of the handle with respect to the main body and/or the power tool from being activated in response to an actuation of an actuator.
12. A power tool for cutting or trimming in accordance with embodiment 11, wherein the locking mechanism comprises a handle rotation lock arranged to move between a locking position and an unlocking position, and wherein the rotational movement of the handle is restricted when the handle rotation lock is positioned at the locking position.
13. A power tool for cutting or trimming in accordance with embodiment 12, wherein the locking mechanism is arranged to restrict the rotational movement of the handle when the power tool is activated.
14. A power tool for cutting or trimming in accordance with embodiment 13, wherein the handle rotation lock is locked in the locking position when the power tool is activated in response to an actuation of the actuator provided on the handle.
15. A power tool for cutting or trimming in accordance with embodiment 12, wherein the locking mechanism is arranged to restrict the activation of the power tool when the handle rotation lock moves to the unlocking position.
16. A power tool for cutting or trimming in accordance with embodiment 15, wherein the actuator is locked in a position such that the power tool remains deactivated when the handle rotation lock moves to the unlocking position.
17. A power tool for cutting or trimming in accordance with embodiment 12, wherein the locking mechanism further comprises an interlock structure arranged to cooperate with the handle rotation lock and the actuator so as to selectively restrict the rotational movement of the handle with respect to the main body and/or the actuation of the actuator.
18. A power tool for cutting or trimming comprising: a main body having a combustion engine and an air intake mechanism provided on the main body and arranged to facilitate an intake of air required by the combustion engine, wherein the air intake mechanism is further arranged to reduce a noise generated by the intake of air during an operation of the combustion engine.
19. A power tool for cutting or trimming in accordance with embodiment 18, wherein the air intake mechanism comprises an inlet and an outlet in fluid communication with the inlet through an air intake passage, and wherein the outlet is arranged to fluidly communicate with a carburetor hole of the combustion engine.
20. A power tool for cutting or trimming in accordance with embodiment 19, wherein the air intake mechanism is arranged to reduce the noise generated by the intake of air by extending a travelling path of the air between the inlet of the air intake mechanism and the carburetor hole of the combustion engine.
21. A power tool for cutting or trimming in accordance with embodiment 20, wherein the air intake mechanism further comprises at least one air diverting structure arrange to extend the air intake passage between the inlet and the outlet.
22. A power tool for cutting or trimming in accordance with embodiment 19, wherein the air intake mechanism further comprises a filter within the air intake passage arranged to filter the intake air and/or reduce the noise generated by the intake of air.
23. A power tool for cutting or trimming in accordance with embodiment 18, wherein the air intake mechanism further comprises a choke actuator arranged to actuate a choke plate of provided in the air intake mechanism so as to control an amount of the intake of air.
24. A power tool for cutting or trimming in accordance with embodiment 23, wherein the choke actuator is a slider.
25. A power tool for cutting or trimming comprising: a main body having a combustion engine and an exhaust outlet arranged to discharge exhaust generated by the combustion engine towards a position substantially away from an object being cut or trimmed by the power tool.
26. A power tool for cutting or trimming in accordance with embodiment 25, wherein the exhaust is discharged towards a position adjacent to where an elongated blade connects to the main body.
27. A power tool for cutting or trimming in accordance with embodiment 26, wherein the exhaust is discharged towards a direction substantially parallel to a main axis of the elongated blade.
28. A power tool for cutting or trimming in accordance with embodiment 25, further comprising an exhaust tube arranged to deliver the exhaust generated by the combustion engine to the exhaust outlet.

## Claims

1. A power tool for cutting or trimming comprising: a handle (230) rotatably connected to a main body (210), and a locking mechanism arranged to selectively restrict a rotational movement of the handle (230) with respect to the main body (210) and/or the power tool from being activated in response to an actuation of an actuator, wherein the locking mechanism comprises a handle rotation lock arranged to move between a locking position and an unlocking position, wherein the handle rotation lock is provided on the handle (230) at a position adjacent to a connection between a connection portion of the handle (230) and the main body (210), and wherein the rotational movement of the handle (230) is restricted when the handle rotation lock is positioned at the locking position,
**characterized in that** the locking mechanism further comprises a blocking means (263), which is located in a part of the handle (230) adjacent to the main body (210) and which has a protrusion (237) extending therefrom, wherein the blocking means (263) is constructed such, when the actuator is depressed, a part of the actuator engages with the blocking means (236), so that the protrusion (237) is shifted downwards to block the handle rotation lock from being moved to the unlocking position, such, when the actuator is released, the protrusion (237) no longer blocks the handle rotation lock, so that the handle rotation lock is now free to be moved to the unlocking position, and such, when the handle rotation lock is moved in the unlocking position, the movement of the actuator is restricted by the engagement of the blocking means (236) therewith, so that the actuator is restricted from actuating the power tool.

2. A power tool for cutting or trimming in accordance with claim 1, wherein the locking mechanism is arranged to restrict the rotational movement of the handle (230) when the power tool is activated.

3. A power tool for cutting or trimming in accordance with claim 2, wherein the handle rotation lock is locked in the locking position when the power tool is activated in response to an actuation of the actuator provided on the handle.

4. A power tool for cutting or trimming in accordance with claim 1, wherein the locking mechanism is arranged to restrict the activation of the power tool when the handle rotation lock moves to the unlocking position.

5. A power tool for cutting or trimming in accordance with claim 4, wherein the actuator is locked in a position such that the power tool remains deactivated when the handle rotation lock moves to the unlocking position.

6. A power tool for cutting or trimming in accordance with claim 1, wherein the locking mechanism further comprises an interlock structure arranged to cooperate with the handle rotation lock and the actuator so as to selectively restrict the rotational movement of the handle (230) with respect to the main body and/or the actuation of the actuator.
